# EUROPÄISCHE PATENTSCHRIFT

(11) **EP 0 864 548 B1**
(45) Veröffentlichungstag und Bekanntmachung des Hinweises auf die Patenterteilung: **16.10.2002**
(21) Anmeldenummer: 98103682.5
(22) Anmeldetag: 03.03.1998
(51) Int. Cl.: C04B 35/80, C04B 35/573, C04B 41/87, C04B 41/45

(54) **Mit Graphitkurzfasern verstärkter Siliciumcarbidkörper**
Graphite short fibre reinforced silicon carbide body
Corps en carbure de silicium renforcé par fibres courtes de graphite

(30) Priorität: 12.03.1997 DE 19710105
(43) Veröffentlichungstag der Anmeldung: 16.09.1998
(73) Patentinhaber: SGL CARBON AG, 65203 Wiesbaden (DE)
(72) Erfinder: Heine, Michael, Dr. Dipl.-Chem., 86695 Allmannshofen (DE); Gruber, Udo, Dipl.-Ing., 86356 Neusäss (DE)

(56) Entgegenhaltungen:
- DE-A- 3 933 039

## Beschreibung

Die Erfindung betrifft einen mit Kohlenstoffasern verstärkten, Kohlenstoff und eine Matrix aus Siliciumcarbid und Silicium enthaltenden Verbundwerkstoff mit hoher Bruchdehnung sowie ein Verfahren zur Herstellung eines solchen Verbundwerkstoffs.

Mit hochtemperaturbeständigen Fasern verstärkte, eine hochtemperaturbeständige keramische Matrix aufweisende Verbundwerkstoffe haben auf einer großen Zahl von Gebieten der fortgeschrittenen Technik zu bemerkenswerten Erfolgen geführt. Sie werden beispielsweise als Auskleidungsmaterial an kritischen Stellen der Außenhaut von wiederverwendbaren Raumflugkörpern, für Düsenauskleidungen von Strahltriebwerken, für Turbinenschaufeln, für hochbelastete Strukturbauteile im Maschinenbau oder für Reibbeläge verwendet. Von Spezialanwendungen und der Anwendung für Entwicklungs- und Testzwecke abgesehen, hat sich jedoch der Einsatz dieser Werkstoffe bislang nicht in größerem Umfang durchgesetzt. Der Grund dafür liegt in ihrem Versagensverhalten. Beim Vorhandensein von Fehlstellen wie z.B. Kerben in der Oberfläche oder dem Auftreten bzw. dem Vorhandensein von Fehlstellen in der Struktur von aus diesen Verbundwerkstoffen bestehenden Körpern versagen diese bei Belastung unter ungehemmter Rißfortpflanzung katastrophal, da hier nicht wie bei Metallen Spannungsspitzen durch Gleitvorgänge im Kristallgitter abgebaut werden können. Ein solches Versagen tritt beispielsweise bei hochfestem, mit Siliciumcarbidfasern verstärktem Siliciumcarbid, in dem die Fasern perfekt in die Matrix eingebunden sind, ein. Da der Eintritt eines solchen Versagens statistischen Gesetzmäßigkeiten mit einer großen Schwankungsbreite unterliegt, können die Bauteile aus diesen spröden Verbundwerkstoffen den an sie gestellten Anforderungen häufig nicht genügen und dies besonders dann nicht, wenn wirtschaftliche Kriterien mit beachtet werden müssen. Es war deshalb das Ziel der Werkstoffentwicklung, die Sprödigkeit der Verbundwerkstoffe zu senken, d.h. ihren Elastizitätsmodul zu senken und ihre Bruchdehnung zu erhöhen. Ein Werkstoff, der diese Eigenschaftskombination in hinreichendem Maße aufweist, ist mit Kohlenstoff- oder Graphitfasern verstärkter Kohlenstoff (CFC). Dieser Werkstoff wird deshalb z.B. als Reibbelag in Hochleistungsbremsen von Flugzeugen verwendet. Nachteilig an diesem Werkstoff ist jedoch die geringe Oxidationsbeständigkeit des Kohlenstoffs, die einen hohen Verschleiß der Teile aus CFC zur Folge hat, wenn diese nicht unter Schutzgas gehalten werden können. Anwendungen ohne Inertgasschutz liegen bei der Verwendung als Bremsenmaterial oder als thermischer Schutzschild an Hochleistungsflugkörpern vor. Die Aufbringung von die Oxidation hemmenden Schutzüberzügen hat hier zwar Verbesserungen gebracht aber das Problem nicht vollständig lösen können. Ein Zweig der Werkstoffentwicklung verfolgte daraufhin die Herstellung von mit Kohlenstoff- oder Graphitfasern verstärkten Siliciumcarbidkörpern, in denen einerseits die C-Fasern durch die umgebende SiC-Matrix gegen Oxidation geschützt ist und andererseits die C-Faser-Einbindung Defekte aufweist, so daß bei noch guter Verstärkungswirkung der Fasern die Rißausbreitung an den Grenzflächen zu den Fasern durch Energieverzehr gehemmt und ein elastischeres Bruchverhalten erreicht wird. Die Realisierung eines solchen Werkstoffs gilt bis heute als schwierig, da sich Silicium und Kohlenstoff bei höheren Temperaturen sehr leicht zu Siliciumcarbid umsetzen, also die C-Fasern unter Verlust ihrer Verstärkungswirkung mindestens teilweise zu SiC umgewandelt werden und weil sich eine Herstellung aus C-Fasern und Siliciumcarbidpulver z.B. durch Heißpressen nicht als hinreichend erfolgreich erwies. Eine Verbesserung der Situation ergab sich durch eine Beschichtung der Kohlenstoffasern nach dem CVD-Verfahren (CVD = Chemical Vapor Deposition) mit Schutzschichten aus hochschmelzenden Stoffen wie Pyrokohlenstoff, TiC, TiN oder SiC vor dem Imprägnieren mit flüssigem Silicium (E. Fitzer et.al. Chemie-Ingenieur-Technik 57, Nr.9, S. 737-746 (1985), hier Seite 738, rechte Spalte). Man bedient sich dieser Schutzwirkung von pyrolytisch abgeschiedenem Kohlenstoff auch in der DE - Patentschrift 39 33 039 C2, gemäß der Formkörper aus Kohlenstoffkurzfasern oder Kohlenstoffilzen zunächst mit einer ersten Schicht aus pyrolytischem Kohlenstoff überzogen, dann graphitiert und danach mit einer zweiten Schicht aus Pyrokohlenstoff versehen werden, ehe sie einer Silizierungsbehandlung mit Flüssigsilicium unterzogen werden. Nachteilig an diesem Verfahren ist der Einsatz des vergleichsweise aufwendigen CVD- bzw. CVI- Verfahrens (CVI = Chemical Vapor Infiltration), nach dem, wenn es pro Verfahrensschritt nur einmal angewandt wird, in den Pyrokohlenstoffschichten Mikrorisse hinterbleiben, in die später Silicium eindringen und mindestens auch Teile der C-Fasern in SiC umwandeln kann (siehe zitierte Literatur Fitzer et. al., S. 740, 2. Spalte) oder, wenn die Beschichtungen mehrlagig ausgeführt werden, die Herstellung der Bauteile sehr aufwendig ist. Nach einem anderen Verfahren (DE 44 38 456 A1) geht man von in spezieller Weise angeordneten Lagen von Bündeln aus Kohlenstoffendlosfasern aus, die mit einer Kunstharzmatrix umgeben werden. Nach dem Carbonisieren dieses, mit Kohlenstoffaserbündeln verstärkten Kunstharzkörpers weist der Körper aufgrund seiner speziellen Herstellungstechnik im wesentlichen translaminare Kanäle auf, die beim Silizieren mit Flüssigsilicium gefüllt werden. Das eingebrachte Silicium setzt sich dann mit der Kohlenstoffmatrix im wesentlichen zu Siliciumcarbid um (siehe auch Mitteilung der DLR PR 10/89 A: WB-BK 4./1). Auch in diesem Falle ist der Aufbau des Grundkörpers aus Langfasergelegen vergleichsweise aufwendig, der Körper weist, je nach Anordnung der C-Faserbündel, insgesamt oder in sich lagenweise anisotrope Eigenschaften auf und wenn eine der gegen Oxidation schützenden Schichten abgebaut ist, liegt immer die darunter befindliche Schicht Kohlenstoffasern ungeschützt frei.

Der Erfindung lag die Aufgabe zugrunde, einen hochtemperaturbeständigen, bis zu Temperaturen von 1700°C im Dauerbetrieb oxidationsbeständigen, weitgehend dichten Verbundwerkstoff, der aus verstärkenden Kohlenstoffasern und einer im wesentlichen aus Siliciumcarbid bestehenden Matrix aufgebaut ist und der eine hohe Bruchdehnung aufweist sowie ein Verfahren zur Herstellung eines solchen Verbundwerkstoffes zu schaffen.

Die Aufgabe wird durch die kennzeichnenden Teile der Ansprüche 1 und 5 gelöst. Die von den Ansprüchen 1 und 5 abhängigen Ansprüche geben vorteilhafte Ausgestaltungen der Erfindung wieder. Der Text der Ansprüche wird hiermit in den beschreibenden Teil der Patentanmeldung eingeführt.

Die den Verbundwerkstoff verstärkenden Fasern sind graphitierte, hochfeste Kohlenstoffkurzfasern,- im folgenden auch Graphitfasern genannt -, die von einer Hülle aus graphitiertem Kohlenstoff umgeben sind. Diese Hülle ist durch Verkoken und nachfolgendes Graphitieren einer die Graphitfasern umgebenden Hülle aus einem Kunstharz erhalten worden. Diese Hülle aus graphitiertem Kohlenstoff ist vorteilhafterweise mindestens zweilagig ausgebildet. Man erhält diesen mehrschaligen Aufbau, indem ein carbonisierter Körper, in dem die C-Fasern mit nur einer Kohlenstoffhülle umgeben sind, im Verlauf des Herstellungsganges mindestens noch einmal mit einem Kunstharz imprägniert und dann nachgebrannt, d.h. carbonisiert wird, ehe er zum Schluß graphitiert wird. Bei dieser Nachbehandlung werden auch die in der ersten, innersten Hülle beim Carbonisieren entstandenen kleinen Risse und Poren, durch die beim späteren Silizieren Silicium bis zu den Graphitfasern vordringen könnte, geschlossen.

Die mit einer Hülle aus graphitiertem Kohlenstoff umgebenen Graphitfasern sind in dem Verbundwerkstoff in eine Matrix eingebettet, die zum überwiegenden Teil aus Siliciumcarbid besteht und die außerdem noch bis zu 20 Gewichtsprozent freies Silicium und geringste Mengen nicht umgesetzten Kohlenstoffs enthält und sie sind mit dieser Matrix fest verbunden. Vorteilhafterweise liegt der Siliciumgehalt der Matrix unter 15 Gewichtsprozent und besonders bevorzugt unter 5 Gew.-%. Dieser Aufbau aus verstärkenden, mit einer graphitierten Hülle versehenen Graphitkurzfasern in einer im wesentlichen aus SiC bestehenden Matrix wird durch Silizieren eines mit Graphitfasern verstärkten Kohlen stoffkörpers erhalten. Die verstärkende Komponente dieses Vorproduktkörpers sind die vorbeschriebenen, die Hüllen aufweisenden hochfesten Graphitkurzfasern. Sie sind in dem Vorproduktkörper in eine Matrix aus einem aus Kunstharz-Festpech-Gemisch hergestellten Kohlenstoff, der entweder nicht graphitiert oder der graphitiert sein kann, eingebunden. Bei dem Silizierungsvorgang wird im wesentlichen nur die Kohlenstoff- oder Graphitmatrix des Vorproduktkörpers zu SiC umgesetzt, während die durch ihre Hülle geschützten Graphitfasern nicht angegriffen werden. Es läßt sich jedoch nicht vermeiden, daß beim Silizieren auch der Matrix benachbarte Grenzbereiche der die Graphitfasern umgebenden, mindestens zweischichtigen Hülle zum Teil zu SiC umgesetzt werden. Außerdem enthält der Verbundkörper noch geringe Mengen nicht zu Siliciumcarbid umgesetzten Kohlenstoffs der ursprünglichen Matrix.

Ein so aufgebauter, aus mit Graphitkurzfasern verstärktem Siliciumcarbid bestehender Körper hat eine Bruchdehnung im Bereich von 0,25 bis 0,5 % und ein fluidzugängliches Porenvolumen von nicht mehr als 5% und bevorzugt von nicht mehr als 1%.
Er verfügt darüber hinaus über weitere vorteilhafte Eigenschaften wie hohe Biegefestigkeit, gute Wärme- und mittlere elektrische Leitfähigkeit, Temperaturwechselbeständigkeit, Abrasionsbeständigkeit und Beständigkeit gegenüber Oxidation bis zu Temperaturen von ca. 1700 °C. Er ist infolgedessen besonders für solche Anwendungen geeignet, in denen die Werkstoffe bei hohen Temperaturen in oxidierender Atmosphäre dynamischen Belastungen standhalten müssen. Sie können deshalb beispielsweise als Teile von Gasturbinen wie Turbinenräder, als Komponenten von Brennern und Düsen, als Heißgasrohre, als Meßsonden oder als Hüllrohre für Sonden und auch als Reibstoffe für hohe Belastungen, wie Beläge für Bremsen von Hochgeschwindigkeitsfahrzeugen verwendet werden.

Körper aus dem Verbundwerkstoff gemäß der Erfindung werden durch einen mehrstufigen Prozeß hergestellt, der sich einer Reihe von bekannten Grundoperationen der Verfahrenstechnik auf dem Gebiet der Kohlenstofftechnologie bedient, die aber in ganz bestimmter Reihenfolge und unter Anwendung bestimmter Verfahrensbedingungen und unter Verwendung ganz bestimmter Stoffe durchgeführt werden.

Ausgangsstoff für die Herstellung sind hochfeste Graphitfasern mit einer Zugfestigkeit von mindestens 3000 MPa, die entweder in Form von Endlosfasern, in "Rovings" genannten Faserbündeln, als Gewebe oder sonst textil verarbeiteten Fasergebilden oder als Kurzfasern vorliegen können. Die Oberflächen aller dieser Formen von Graphitfasern werden sodann nach einem der bekannten Verfahren mit einem Kunstharz vollständig überzogen. Im Fall von Kurzfasern verwendet man dazu Mischer oder Kalander, in denen flächig verteilte Kurzfasern oder Kurzfaservliese mit einer ausreichenden Menge Harz belegt und das überschüssige Harz durch Verwalzen abgepreßt wird. Die Verarbeitung von Kurzfasern ist jedoch häufig schwierig, weil dabei keine gut reproduzierbaren Ergebnisse erreicht werden. Deshalb verwendet man bevorzugt Faserrovings oder aus Rovings hergestellte Gewebe. Besonders bevorzugt werden Rovinggewebe verwendet, die aus 3000 Filamente enthaltenden Rovings hergestellt worden sind. Die Oberflächen der Filamente dieser Gewebe werden nach einer der üblichen Prepregtechniken mit einem Kunstharz überzogen. Es ist auch möglich, Abfälle aus der Prepregherstellung oder -verarbeitung direkt zu verwenden. Für den Verfahrensschritt des Überziehens der C-Fasern mit einem Kunstharz können alle Kunstharze verwendet werden. Es werden jedoch solche Kunstharze bevorzugt, die eine gute Koksausbeute beim Carbonisieren ergeben wie beispielsweise Furanharze, Polyimide oder Polyarylatharze wie z.B. Polyphenylene. Besonders bevorzugt sind jedoch Phenolharze und unter diesen Harze des Resoltyps.

Die mit Kunstharz imprägnierten oder überzogenen Fasern oder Fasergebilde werden sodann in eine Preßform gegeben, zum Entfernen von Luft oder Gasen zusammengepreßt und es wird das Harz unter Aufrechterhalten des Preßdruckes ausgehärtet. Die Wahl der Bedingungen für das Härten richtet sich nach den Erfordernissen des eingesetzten Harzes. Wenn warmhärtende Harze verwendet werden, muß eine temperierbare Preßform angewendet werden. Bei Verwendung von Prepregs ist es empfehlenswert, beim Zusammenpressen und Aushärten Trennfolien oder Trennblätter aus Papier zwischen die einzelnen Lagen zu legen. Wenn in Mischern wie z.B. Z-Arm-Knetern hergestellte Kurzfasermischungen verpreßt und gehärtet werden, sollte die Preßform ebenfalls lagenweise unter Zwischenlegen von solchen verkokbaren Trennmitteln gefüllt werden.

Die zusammengepreßten und ausgehärteten Körper werden sodann einem der bekannten Brenn- oder Carbonisierungsprozesse unterzogen, der stets unter Ausschluß oxidierend wirkender Substanzen, d.h. entweder unter Schutzgas oder unter Umhüllen des zu brennenden Gutes mit einem als Getter wirkenden, die oxidierend wirkenden Medien, speziell Sauerstoff bindenden Stoff durchgeführt wird. Um eine gute Koksausbeute zu erreichen, wird dieser Verfahrensschritt mit einem vergleichsweise geringen Temperaturgradienten in der Aufheizphase im Bereich von 300 bis 600°C von maximal 4°C pro Stunde ausgeführt oder es wird unter Druck verkokt. Die Endtemperatur bei diesem Verfahrensschritt soll 1250°C nicht überschreiten. Die bevorzugte Endtemperatur beträgt 850 bis 950°C.

Der gebrannte, d.h. verkokte oder carbonisierte Körper wird nun noch mindestens einmal mit einem carbonisierbaren Mittel imprägniert und einem Brennprozeß oder sogenannten Nachbrennprozeß unterzogen. Für das Imprägnieren wird vorteilhafterweise die sogenannte Vakuum - Druck - Methode angewandt. Es können aber auch andere bekannte Verfahren verwendet werden. Als Imprägniermittel können alle für ein Imprägnieren von Teilen aus Kohlenstoff bekannten Stoffe mit einer Koksausbeute von mehr als 30 Gewichtsprozent wie beispielsweise Phenolharze des Novolak oder Resoltyps, Furanharze oder Imprägnierpeche Verwendung finden. Das Nachbrennen erfolgt wieder unter Ausschluß oxidierend wirkender Substanzen. Es kann in diesem Falle jedoch vergleichsweise schnell, d.h., z.B. mit einer Aufheizung auf die Endtemperatur, die innerhalb der gleichen Bereiche wie im vorbeschriebenen Carbonisierungsschritt liegt, von 8 bis 10 Stunden gearbeitet werden. Bei diesem Verfahrensschritt soll eine oder es sollen mehrere zusätzliche Kohlenstoffhüllen auf die bereits vorhandene Hülle aufgebracht werden und es sollen nach dem ersten Carbonisierungsschritt in der ersten Hülle noch vorhandene Risse und Poren geschlossen werden. Je nach beabsichtigter Schutzwirkung für die Fasern kann dieser Imprägnier- und Nachbrennvorgang auch mehrmals, beispielsweise 3 mal erfolgen.

Der ein- oder mehrmals nachimprägnierte und nachgebrannte Körper wird nun graphitiert. Für diesen Schritt können alle bekannten Graphitierungsverfahren angewandt werden. Das Graphitieren soll im Temperaturbereich von 1800 bis 2400°C, vorzugsweise im Temperaturbereich von 1800 bis 2200°C durchgeführt werden. Bei Anwendung höherer Temperaturen sinkt die Festigkeit der Fasern ab, so daß ihre verstärkende Wirkung im Verbundwerkstoff nicht mehr voll zum Tragen kommt.

Nach dem Graphitieren wird der Körper, der sich, besonders bei Vorhandensein der Trennmittellagen, die nunmehr carbonisiert und graphitiert sind, leicht zu gut hantierbaren Teilen spalten läßt, zerkleinert. Das Zerkleinern geschieht mit Hilfe von solchen Mahleinrichtungen, die eine möglichst geringe Zerkleinerung der Fasern bewirken. Es werden deshalb bevorzugt Schneidmühlen mit einem große Sieböffnungen aufweisenden Siebeinsatz eingesetzt. Ungeeignet sind nach dem Prall- oder Schlagprinzip arbeitende Mühlen, da in ihnen die Fasern in so kleine Bruchstücke zerlegt werden, daß im fertigen Verbundkörper keine ausreichende Verstärkungswirkung mehr resultiert. Wenn der Anteil an Graphitfasern mit einer Länge von 1 mm im gesamten Mahlgut 18 Gewichtsprozent oder mehr beträgt, kann noch eine ausreichende Verstärkungswirkung im Endprodukt erreicht werden.

Mit der Zerkleinerung des graphitierten Körpers sind die Verfahrensschritte zur Herstellung der Trockengutkomponente für die Herstellung des für das Silizieren vorgesehenen CFC - Vorproduktkörpers abgeschlossen (CFC = mit Kohlenstoffasern verstärkter Kohlenstoff, graphitische Formen des Kohlenstoffs jeweils eingeschlossen).

Zur Herstellung dieses CFC - Vorproduktkörpers wird das beim Zerkleinern erhaltene Mahlgut zunächst mit einem carbonisierbaren Binder gemischt. Hierzu können alle in der Kohlenstofftechnik gebräuchlichen Mischer verwendet werden. Vorzugsweise kommen aber langsam laufende Mischer zum Einsatz, in denen die Beschädigung oder Zerkleinerung der mit den Kohlenstoffhüllen ausgerüsteten C - Faserfragmente möglichst gering ist. Als Binder können alle kohlenstoffhaltigen Bindemittel aus der Gruppe Kunstharze, Peche und, bevorzugt, Gemische aus Kunstharzen und Pechen verwendet werden. Bevorzugte Binder aus der Gruppe der Kunstharze sind Phenolharze und Furanharze. Es können auch Kunstharze mit gegenüber den vorgenannten Harzen höheren Koksausbeuten wie beispielsweise Polyarylatharze eingesetzt werden, wenn die Kostensituation dies erlaubt. Aus der Gruppe der Peche werden bevorzugt solche mit Erweichungspunkten nach DIN 52025 von über 90°C eingesetzt. Besonders bevorzugt sind jedoch Mischungen aus Kunstharz und pulverförmigem Festpech. Hierfür geeignete Peche haben einen Erweichungspunkt nach DIN 52025, der im Bereich von 130 bis 260°C liegt. Geeignet sind auch Mesophasenpeche, wenn dies die Kostensituation zuläßt. Die Peche haben eine Korngröße im Bereich von 1 bis 60 µm. Von den Kunstharzen sind die im vorstehenden für diesen Verfahrensschritt genannten Harze geeignet, wobei von diesen Phenolharze vom Resoltyp und Furanharze bevorzugt werden. Das Mischungsverhältnis beim Herstellen einer Harz - Pech - Mischung kann in weiten Grenzen variieren. Bei sehr geringen Anteilen an Festpech kommt die die Koksausbeute erhöhende Wirkung des Pechs nicht in hinreichendem Maße zur Wirkung. Wenn die Gehalte an Festpech zu hoch werden, treten Schwierigkeiten in der Verarbeitung auf. Eine Mischung von 3 bis 5 Gewichtsteilen Kunstharz mit einem Gewichtsteil Festpech hat sich als günstig erwiesen. Zur Herstellung einer formbaren Masse aus dem faserhaltigen Trockengut und dem Binder werden 1 bis 2 Gewichtsteile Trockengut mit 1 Gewichtsteil Binder gemischt. Bei Verwendung von reinen Pechbindern müssen die Mischer temperierbar sein, beim Einsatz von Kunstharzen oder Kunstharz - Pech - Mischungen muß bei Raumtemperatur gemischt werden.

Nach der Beendigung des Mischvorgangs, der maximal 30 Minuten beansprucht, wird die Mischung in die Form einer Gesenk- oder in den Preßbehälter einer isostatischen Presse gefüllt, verdichtet und im Falle von kunstharzhaltigen Bindern gehärtet. Bei reinen Pechbindern muß die Preßform nach dem Pressen unter Halten des Druckes solange gekühlt werden, bis der Binder erstarrt ist. Der auf die Masse einwirkende Preßdruck beträgt bei allen hier in Frage kommenden Mischungen mindestens 10 und höchstens 30 bar. Die zum Aushärten des jeweiligen kunstharzhaltigen Binders angewandte Temperatur richtet sich nach dem verwendeten Kunstharz und ist den Verarbeitungshinweisen der Hersteller zu entnehmen oder durch einfache Versuche feststellbar. Die für die Härtung aufzuwendende Zeit, während der auch der Preßdruck aufrechterhalten werden muß, hängt von der Größe des herzustellenden Formkörpers und vom verwendeten Kunstharz ab. Bei üblichen Binderharzen dauert der Härtungsvorgang 30 Minuten bis 5 Stunden.

Nach dem Erhärten wird der Formkörper der Preßform entnommen und carbonisiert. Die Endtemperatur soll bei diesem Verfahrensschritt 1250°C nicht überschreiten. Die bevorzugt angewandte Endtemperatur liegt aus wirtschaftlichen Gründen im Bereich von 850 bis 950°C. Wie bei allen Carbonisierungsoder Brennschritten dieses Herstellungsverfahrens muß auch hier so gearbeitet werden, daß der Zutritt von oxidierend wirkenden Substanzen zu den Formkörpern, die gebrannt werden sollen, ausgeschlossen ist. Der Brennprozeß muß in diesem Falle so ausgeführt werden, daß eine hohe Koksausbeute aus dem Binder oder dem Bindersystem resultiert. Dies gelingt durch Anwendung eines Druckverkokungsverfahrens oder dadurch, daß der Temperaturgradient in der Aufheizphase im Bereich von 300 bis 600°C niedrig, bevorzugt unter 4°C pro Stunde, gehalten wird.

Für die Optimierung der Bruchdehnung des Endprodukts dieses Herstellungsverfahrens kann es vorteilhaft sein, diesem Carbonisierungsprozeß noch einen Graphitierungsschritt nachzuschalten. Die Durchführung einer solchen Maßnahme ist jedoch nicht zwingend und kann aus wirtschaftlichen Gründen auch unterbleiben. Dieser Schritt kann nach allen, dem Fachmann hierfür bekannten Verfahren durchgeführt werden. Es muß aber auch hier darauf geachtet werden, daß die Endtemperatur beim Graphitieren 2400°C nicht überschreitet. Vorzugsweise wird bei Temperaturen von 1800 bis 2200 °C gearbeitet.

Als letzter Schritt in der Kette der Teilprozesse der Erfindung folgt das Silizieren der graphitierten CFC-Vorproduktkörper. Hierzu wird das im Stand der Technik bekannte Silizieren mit Flüssigsilicium angewandt (siehe z.B. E. Fitzer et. al. Chemie-Ingenieur-Technik 57, Nr.9, Seiten 737-746 (1985). Bei diesem Verfahren befindet sich der zu silizierende Körper, der ein den ganzen Körper durchsetzendes, offenes Porensystem besitzen muß, in einem Behälter, auf dessen Boden geschmolzenes Silicium ist. Das Silicium dringt infolge seiner ausgezeichneten Benetzbarkeit gegenüber Kohlenstoff durch Kapillarkräfte in alle Poren und Risse des CFC-Körpers ein und reagiert dort mit dem Kohlenstoff der Matrix zu Siliciumcarbid. Bei genügend hohen Temperaturen, die im Bereich von ca. 2200°C liegen und ausreichend langen Einwirkungszeiten können, was hier vermieden werden muß, die Kohlenstoffkörper bei Vorhandensein genügender Mengen Siliciums auch vollständig in SiC umgewandelt werden. Es muß auch beachtet werden, daß graphitische, sehr gut geordnete Kohlenstofformen langsamer zu SiC umgesetzt werden als solche, die kristallographisch gesehen weniger gut geordnet sind wie beispielsweise nur gebrannter, nicht graphitierter Kohlenstoff. Bei der Durchführung dieses Verfahrensschrittes müssen deshalb die Verfahrensbedingungen so gewählt werden, daß einerseits im wesentlichen nur die Kohlenstoffmatrix in Siliciumcarbid umgewandelt und daß andererseits der Anteil der mit graphitiertem Kohlenstoff umhüllten Graphitkurzfasern im wesentlichen nicht umgesetzt wird, damit die Graphitfasern zum einen verstärkend wirken können, zum zweiten die Risse, die unter Belastung in dem Verbundwerkstoffkörper eventuell entstehen und sich in der spröden Matrix fortpflanzen, bei ihrem Auftreffen auf die nicht perfekt strukturierten Übergangszonen von der Matrix über die Kohlenstoffhüllen zu den Fasern ihre Fortpflanzungsenergie abgeben können, so daß die Rißfortpflanzung zum Stillstand kommt und zum dritten Dehnungen und Kriechprozesse in und an den Hüllen aus graphitiertem Kunstharzkohlenstoff, die die Graphitfasern umgeben und die den Übergang zwischen den Graphitfasern und der Siliciumcarbidmatrix bilden, stattfinden können. Das Silicieren kann im Temperaturbereich von 1450 bis 2200°C durchgeführt werden. Bevorzugt wird jedoch im Temperaturbereich von 1650 bis 1750°C unter Vakuum gearbeitet, wobei vorzugsweise das zum Silizieren verwendete Gefäß, bzw. der zum Silizieren verwendete Ofen vor Beginn des Prozesses mit einem Inertgas, beispielsweise mit Argon gespült wird, um Reste reaktiver Gase zu entfernen. Das Aufheizen des Reaktors auf Reaktionstemperatur kann den technischen Gegebenheiten der Silizierungsanlage gemäß schnell geschehen. Nach Erreichen der Silizierungstemperatur beträgt die Zeit, die für das Infiltrieren und Reagieren zu SiC benötigt wird, 10 Minuten bis 1 Stunde. Bevorzugt wird mit einer Imprägnier- und Reaktionszeit von 0,5 Stunden gearbeitet. Die angegebenen Imprägnier- und Reaktionszeiten erlauben eine wirtschaftliche Verfahrensweise. Wo dies die Umstände erfordern, kann auch mit längeren Zeiten gearbeitet werden. Es ist auch ein Silizieren ohne Anwendung von Vakuum möglich. In diesem Falle muß bei Temperaturen von 2100 bis 2200°C aber ebenfalls unter Schutzgas siliziert werden. Die Summe von Infiltrier- und Reaktionszeit liegt auch hier zwischen 10 Minuten und einer Stunde, bevorzugt bei 0.25 Stunden. Bei diesen höheren Temperaturen muß jedoch größeres Augenmerk auf die Einhaltung der einmal durch Vorversuche ermittelten Reaktionsbedingungen gelegt werden, da hier die Umsetzung von Silicium mit dem Kohlenstoff zu SiC wesentlich schneller abläuft. Bei allen Silizierungen bedient man sich vorteilhafterweise der sogenannten Dochttechnik. Hierbei liegen die Körper, die siliziert werden sollen, auf porösen, bezogen auf das Silicium sehr saugfähigen Kohlenstoffkörpern, deren unterer Teil im flüssigen Silicium steht. Das Silicium steigt dann durch diese Dochtkörper in die zu silizierenden Körper, ohne daß letztere direkte Verbindung mit dem Siliciumbad haben. Diese Verfahrensweise erspart aufwendige Putzarbeiten nach dem Silizieren. Im folgenden wird die Erfindung anhand eines Ausführungsbeispiels erläutert:

Das Ausführungsbeispiel zeigt die Herstellung eines erfindungsgemäßen Verbundwerkstoffkörpers aus einem Prepreg. Zur Herstellung des Prepregs wurde ein aus 3K-Graphitfaser-Rovings (Rovings aus 3000 Einzelfilamenten) bestehendes Gewebe in Köperbindung mit einem Flächengewicht von 240 g/m² verwendet. Dieses Gewebe wurde auf einer üblichen Anordnung zur Herstellung von Prepregs mit einem wäßrigen Phenolharzsystem des Resoltyps (14 Gewichtsprozent Wasser, Bestimmung des Wassergehalts nach Karl Fischer, ISO 760) imprägniert und es wurde das überschüssige Phenolharz auf Walzen abgepreßt. Die so erhaltenen Prepreglagen wurden sodann in eine Preßform eingebracht, wobei zwischen die einzelnen Prepreglagen Trennpapiere gelegt wurden. Nach dem Füllen der Preßform wurde der Stapel aus Prepreglagen mit einem Druck von 5 N/mm² 3 Stunden lang bei einer Temperatur von 140°C gehärtet. Es ist auch möglich, die Prepregs nur unter Dazwischenlegen von Trennpapieren oder Trennfolien übereinanderzustapeln, d.h. nicht unter Druck auszuhärten und diese Stapel direkt einem Brenn- oder Carbonisierungsprozeß mit einer moderaten Temperatursteigerungsrate zuzuführen. Diese verkürzte Verfahrensweise wird angewandt, wenn nicht höchste Qualitätsanforderungen an das Endprodukt gestellt werden. Nach dem Ausbau aus der Preßform wurden die verdichteten und ausgehärteten Stapel von Prepregs in einem Schutzgasofen in einer Reinstickstoffatmosphäre mit einer Aufheizzeit von 144 Stunden bis zu einer Endtemperatur von 900°C carbonisiert. Dabei betrug der Temperaturgradient beim Aufheizen im Bereich von 300 bis 600°C an keiner Stelle des Temperaturverlaufs in diesem Bereich mehr als 4°C pro Stunde. Nach dem Abkühlen auf Ausbautemperatur, das möglichst schnell aber unter Schutzgas durchgeführt wurde, wurde der carbonisierte Körper mit einem Phenolharz des Novolak-Typs (Bakelite IT 491) imprägniert und danach in einem Schutzgasofen innerhalb von 8 Stunden auf eine Temperatur von 950°C erhitzt. Danach wurde auf Raumtemperatur abkühlt, was ca. 16 Stunden dauerte. Auf diesen ersten Imprägnier- und Nachbrennschritt folgte ein zweiter. Bei diesem wurde der Körper jedoch mit einem Imprägnierpech auf Steinkohlenteerbasis mit einem Erweichungspunkt nach DIN 52025 von 60°C, wie es in der Graphitelektrodenproduktion verwendet wird, imprägniert. Auf diesen Imprägniervorgang folgte wiederum ein Nachbrennen, das unter den gleichen Bedingungen stattfand wie beim ersten Nachbrennvorgang (8 h Aufheizen auf 950 °C, Abkühlen ca. 16 h). Für Endprodukte mit besonders guten Eigenschaften kann nach diesem Verfahrensschritt unter Verwendung entweder eines Kunstharzes oder eines Imprägnierpeches noch ein dritter Imprägnier- und Nachbrennprozeß durchgeführt werden. Die so erhaltenen, nachverdichteten Kohlenstoffkörper wurden sodann durch Aufheizen unter Schutzgas auf eine Temperatur von 2200°C und 20 minütliches Halten bei dieser Temperatur graphitiert. Nach dem Ausbau aus dem Graphitierungsofen wurden die Körper in dünne Lagen getrennt, was durch die beim Aufeinanderstapeln der Prepregs eingelegten Trennpapiere sehr erleichtert wurde und es wurden die erhaltenen Lagen und Bruchstücke gemahlen. Dazu wurde eine Schneidmühle, Typ Rotoplex der Firma Hosokawa Alpine AG/Augsburg mit einem Siebeinsatz, dessen Öffnungen eine lichte Weite von 5 mm hatten, verwendet. Im gemahlenen Gut betrug der Partikelanteil zwischen 0,25 mm und 2 mm 48 % und derjenige über 2,0 mm 1 %. Sodann wurde das gemahlene Material ohne weiteres Klassieren in einem Z-Arm-Kneter bei Raumtemperatur mit einem Binder zu einer formbaren Masse vermischt. Als Binder wurde eine Mischung aus einem Phenolharz des Resoltyps mit einem fein gemahlenen Steinkohlenteerpech (Körnung kleiner/gleich 20 µm), das einen Erweichungspunkt (DIN 52025) von 230°C und eine Koksausbeute (nach DIN 51905) von 82% hatte, verwendet. Das Mischgut war wie folgt zusammengesetzt: 150 g Phenolharz, 45 g Steinkohlenteerpech und 275 g gemahlenes Trockengut. Zum Mischen wurde die Harzkomponente im Mischer vorgelegt, dann wurde das Pech eingemischt und nach dem dann erfolgten Zugeben des Mahlguts wurde 15 Minuten lang gemischt. Nach Beendigung des Mischens wurde die Mischung in die heizbare Form einer Gesenkpresse gefüllt, in dieser unter einem spezifischen Preßdruck von 15 bar auf eine Härtungstemperatur von 150°C erwärmt und unter diesen Bedingungen 2 Stunden lang ausgehärtet. Nach dem Entformen wurde der gehärtete Körper carbonisiert, wobei die gleichen Bedingungen wie beim vorbeschriebenen Carbonisieren der Prepregs angewandt wurden (Aufheizen unter Schutzgas auf 900°C innerhalb von 144 Stunden, wobei der Temperaturgradient im Bereich von 300 bis 600°C 4°C pro Stunde nicht überschreiten soll; Abkühlen unter Schutzgas). Die gebrannten oder carbonisierten Körper wurden sodann in einen Schutzgasofen überführt und dort unter Argon als Schutzgas durch Aufheizen bis auf eine Temperatur von 2200°C und 15 minütliches Halten bei dieser Temperatur graphitiert. Während des gesamten Verfahrensganges änderten die Formkörper vom grünen über den gebrannten bis zum graphitierten Zustand wie aus der folgenden Aufstellung zu ersehen ist, ihre Außenmaße (Länge x Breite x Dicke in mm) praktisch nicht. Zusätzlich ist die Änderung der Rohdichte in Relation zum Verfahrensgang wiedergegeben:
Formkörper "grün", d.h. nicht carbonisiert aber ausgehärtet:
   160 x 160 x 13,8 mm; Rohdichte 1,20 g/cm³,
Formkörper carbonisiert aber nicht nachimprägniert und nachgebrannt:
   160 x 160 x 13,8 mm; Rohdichte 1,03 g/cm³,
Formkörper graphitiert:
   160 x 160 x 13,7 mm; Rohdichte 1,03 g/cm³.

Da sich die Außenmaße des Formkörpers auch beim nachfolgenden Silzieren praktisch nicht weiter ändern, ist durch die vorliegende Verfahrensweise die Möglichkeit einer Fertigung von Formkörpern mit vorgegebenen Maßen gegeben ohne daß wesentliche Nachbearbeitungsschritte durchgeführt werden müssen. Der graphitierte Formkörper wurde danach in einen induktiv heizbaren Vakuumsilizierungsofen überführt. Am Boden dieses Ofens befand sich eine Wanne mit Silicium, in der sich drei säulenförmige Unterstützungen aus stark porösem CFC-Material befanden, auf die der zu silizierende Körper gelegt wurde. Diese Säulen wirkten beim nachfolgenden Silizieren als Dochte zum Übertragen des Siliciums von der Siliciumschmelze auf den Körper. Zum Silizieren wurde der Ofen auf einen Innendruck von 3 mbar oder weniger ausgepumpt und innerhalb von 2 Stunden auf eine Temperatur von 1750°C erhitzt. Nach dem Erreichen der Endtemperatur wurde die Temperatur noch 10 Minuten lang bei einer Temperatur von 1750°C gehalten und dann möglichst schnell abgekühlt. Das Abkühlen wurde durch mehrmaliges Spülen mit einem Schutzgas beschleunigt. Der nach diesem Verfahrensgang hergestellte Verbundwerkstoff hatte folgende Eigenschaften (Messungen der Festigkeitsdaten nach 3-Punkt-Prüfverfahren an Proben mit den Abmessungen 100 x 10 x 6 mm):

| | |
|---|---|
| Biegefestigkeit | 57,3 MPa |
| Bruchdehnung | 0,28 % |
| Elastizitätsmodul | 42600 MPa |
| Rohdichte ¹⁾ | 2,27 g/cm³. |

| | |
|---|---|
| 1) Bestimmung nach DIN 51918 | |

Die nach dem vorbeschriebenen Verfahren hergestellten Körper zeigen beim Biegebruchversuch kein Sprödbruchverhalten. Sie brechen wie ein quasiduktiles Material.

Durch die Erfindung werden wirkungsvoll durch hochfeste Graphitkurzfasern verstärkte, oxidationsgeschützte, bei hohen Temperaturen dynamisch stark belastbare Verbundwerstoffe mit einer überwiegend aus Siliciumcarbid bestehenden Matrix bereitgestellt. Das angegebene Herstellungsverfahren gestattet trotz der Zahl der durchzuführenden Prozeßschritte eine preiswerte Herstellung erfindungsgemäßer Verbundwerkstoffkörper, da bei seiner Durchführung einerseits bekannte Verfahrensschritte der Kohlenstofftechnik angewandt werden und andererseits die direkte Herstellung maßgetreuer Körper ermöglicht wird.

Zur weiteren Erläuterung wird der Verfahrensgang für die Herstellung erfindungsgemäßer Körper in Form eines Flußdiagramms dargestellt:

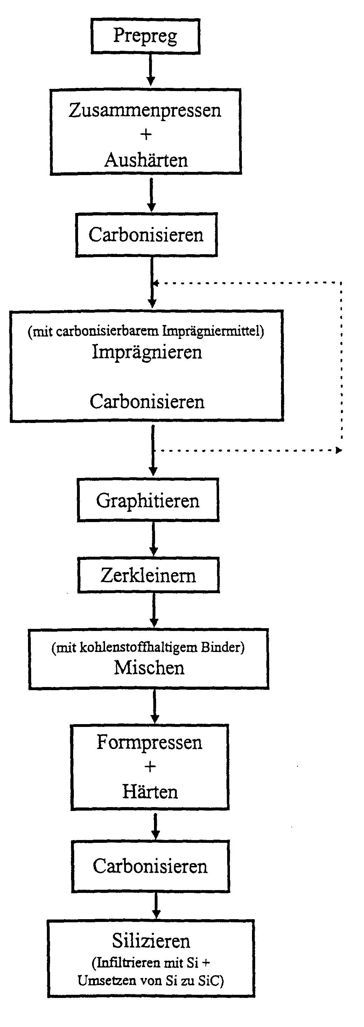

## Patentansprüche

1. Mit Kohlenstoffasern verstärkter, Kohlenstoff und eine Matrix aus Siliciumcarbid und Silicium enthaltender Verbundwerkstoff mit hoher Bruchdehnung,
**gekennzeichnet durch**
a) homogen über den Verbundwerkstoff verteilte,
verstärkende Graphitkurzfasern einer Länge von 0,1 bis 5 mm,
die mit einer Hülle aus teilweise in Siliciumcarbid umgewandelten graphitiertem Kohlenstoff, der **durch** Verkoken und nachfolgendes Graphitieren von Kunstharzen entstanden ist, verbunden ist,
b) eine im wesentlichen aus Siliciumcarbid bestehende, bis 20 Gewichtsprozent elementares Silicium enthaltende Matrix,
die **durch** Reaktion einer in dem Vorprodukt für den Verbundwerkstoff vorhandenen, **durch** Verkoken eines kohlenstoffhaltigen Binders entstandenen Kohlenstoffmatrix mit Flüssigsilicium entstanden ist,
c) eine Bruchdehnung von 0,25 bis 0,5% und **durch**
d) ein offenes Porenvolumen von maximal 5 %.

2. Verbundwerkstoff gemäß Patentanspruch 1,
**dadurch gekennzeichnet, daß**
die die verstärkenden Graphitkurzfasern umgebende Hülle aus graphitiertem Kohlenstoff frei von offenen Rissen oder Poren ist.

3. Verbundwerkstoff gemäß Patentanspruch 1 oder 2,
**dadurch gekennzeichnet, daß**
er ein offenes Porenvolumen von kleiner gleich 1 % hat.

4. Verbundwerkstoff gemäß Patentanspruch 1, 2 oder 3,
**dadurch gekennzeichnet, daß**
die im wesentlichen aus Siliciumcarbid bestehende Matrix nicht mehr als 15 Gewichtsprozent elementares Silicium enthält.

5. Verfahren zur Herstellung eines mit Kohlenstoffasern verstärkten, Kohlenstoff und eine Matrix aus Siliciumcarbid und elementarem Silicium enthaltenden Verbundwerkstoffs mit hoher Bruchdehnung aus Kohlenstoffendlosoder Kurzfasern enthaltenden Prepregs,
**gekennzeichnet durch** die folgenden, nacheinander durchzuführenden Verfahrensschritte:
a. Zusammenpressen von mindestens zwei Lagen von aus hochfesten Graphitfasern und Kunstharz bestehenden Prepregs und Aushärten des **durch** das Zusammenpressen erhaltenen Körpers,
b. Carbonisieren des nach Verfahrensschritt a. erhaltenen Körpers,
c. Imprägnieren des nach Verfahrensschritt b. erhaltenen, porösen Körpers mit einem carbonisierbaren Imprägniermittel und danach Carbonisieren des imprägnierten Körpers,
d. Graphitieren des nach Verfahrensschritt c. erhaltenen Körpers,
e. Zerkleinern des nach Verfahrensschritt d. erhaltenen, graphitierten Körpers,
f. Mischen von mindestens einem Teil des nach Verfahrensschritt e. erhaltenen Mahlgutes mit einem kohlenstoffhaltigen Binder aus der Gruppe Kunstharze, Peche, Gemische aus Kunstharzen und Pechen,
g. Formpressen und Härten der nach Verfahrensschritt f. erhaltenen Mischung,
h. Carbonisieren der nach Verfahrensschritt g. erhaltenen Formkörper,
i. Infiltrieren der nach Verfahrensschritt h. erhaltenen porösen Körper mit flüssigem Silicium bei gleichzeitigem Umsetzen der Kohlenstoffmatrix des Körpers zu Siliciumcarbid unter Erhalt der in dem Körper vorhandenen Graphitkurzfasern.

6. Verfahren nach Patentanspruch 5,
**dadurch gekennzeichnet, daß**
in Verfahrensschritt a. Prepregabfälle verwendet werden.

7. Verfahren nach Patentanspruch 5. oder 6.,
**dadurch gekennzeichnet, daß**
die Prepregs in Verfahrensschritt a. nur übereinandergelegt werden und in diesem Verfahrensschritt kein gesonderter Härtungsschritt durchgeführt wird und daß die Prepregs beim Aufheizen während des Verfahrensschrittes b. ausgehärtet werden.

8. Verfahren nach einem der Patentansprüche 5. bis 7,
**dadurch gekennzeichnet, daß**
der aus Imprägnieren und nachfolgendes Carbonisieren bestehende Verfahrensteil c. bis zu drei mal nacheinander durchgeführt wird.

9. Verfahren nach Patentanspruch 8.,
**dadurch gekennzeichnet, daß**
als carbonisierbares Imprägniermittel ein Kunstharz oder ein Pech verwendet wird.

10. Verfahren nach einem der Patentansprüche 5. bis 9.,
**dadurch gekennzeichnet, daß**
das Graphitieren gemäß Verfahrensschritt d. im Temperaturbereich von 1800 bis 2200°C durchgeführt wird.

11. Verfahren nach einem der Patentansprüche 5 bis 10,
**dadurch gekennzeichnet, daß**
in Verfahrensschritt e. durch einen Mahlvorgang zerkleinert wird.

12. Verfahren nach Patentanspruch 11,
**dadurch gekennzeichnet, daß**
ein schonendes Mahlverfahren angewandt wird, bei dem möglichst lange Faserfragmente erhalten werden.

13. Verfahren nach einem der Patentansprüche 5. bis 12.,
**dadurch gekennzeichnet, daß**
in Verfahrensschritt f. als Binder eine Mischung aus einem Kunstharz mit einem Festpech aus der Gruppe Steinkohlenteerpech, Petrolpech, Mesophasenpech mit einer Korngröße von 1 bis 60 µm und mit einem Erweichungspunkt von 150 bis 250 °C verwendet wird.

14. Verfahren nach einem der Patentansprüche 5 bis 13,
**dadurch gekennzeichnet, daß**
das Carbonisieren gemäß Verfahrensschritt h. in einer solchen Weise durchgeführt wird, daß aus dem in. Verfahrensschritt f. eingebrachten Binder eine hohe Koksausbeute resultiert.

15. Verfahren nach einem der Patentansprüche 5 bis 14,
**dadurch gekennzeichnet, daß**
bei Durchführung des Verfahrensschrittes i. eine Temperatur von 1750°C nicht überschritten wird.

16. Verfahren nach Patentanspruch 15.,
**dadurch gekennzeichnet, daß**
das Silizieren unter Vakuum durchgeführt wird.

## Claims

1. Composite material containing carbon and a matrix of silicon carbide and silicon and reinforced with carbon fibres, which material has high elongation at break, **characterised by**
a) reinforcing short graphite fibres of a length of 0.1 to 5 mm
homogeneously distributed throughout the composite material
and associated with a shell of graphitised carbon partially converted into silicon carbide, which carbon has been obtained by coking and subsequent graphitisation of synthetic resins,
b) a matrix substantially consisting of silicon carbide and containing up to 20 wt.% of elemental silicon
which matrix has been obtained by reacting a carbon matrix obtained by coking a binder containing carbon and present in the precursor to the composite material with liquid silicon,
c) elongation at break of 0.25 to 0.5% and by
d) an open pore volume of at most 5%.

2. Composite material according to claim 1,
**characterised in that**
the shell of graphitised carbon enclosing the reinforcing short graphite fibres contains no open cracks or pores.

3. Composite material according to claim 1 or 2,
**characterised in that**
it has an open pore volume of ≤1%.

4. Composite material according to claim 1, 2 or 3,
**characterised in that**
the matrix substantially consisting of silicon carbide contains no more than 15 wt.% of elemental silicon.

5. Process for the production of a composite material containing carbon and a matrix of silicon carbide and elemental silicon and reinforced with carbon fibres, which material has high elongation at break from prepregs containing continuous or short carbon fibres,
**characterised by** the following process stages to be performed in succession:
a. compression of at least two layers of prepregs consisting of high strength graphite fibres and synthetic resin and curing of the article obtained by compression,
b. carbonisation of the article obtained according to process stage a.,
c. impregnation of the porous article obtained according to process stage b. with a carbonisable impregnating agent and subsequent carbonisation of the impregnated article,
d. graphitisation of the article obtained according to process stage c.,
e. comminution of the graphitised article obtained according to process stage d.,
f. mixing of at least a proportion of the ground material obtained according to process stage e. with a carbon-containing binder from the group comprising synthetic resins, pitches, mixtures of synthetic resins and pitches,
g. compression moulding and curing of the mixture obtained according to process stage f.,
h. carbonisation of the moulding obtained according to process stage g.,
i. infiltration of the porous article obtained according to process stage h. with liquid silicon with simultaneous conversion of the carbon matrix of the article into silicon carbide while retaining the short graphite fibres present in the article.

6. Process according to claim 5,
**characterised in that**
prepreg waste is used in process stage a..

7. Process according to claim 5 or 6,
**characterised in that**
in process stage a. the prepregs are merely laid one upon the other and no separate curing stage is performed in this process stage and that the prepregs are cured on heating during process stage b..

8. Process according to one of claims 5 to 7,
**characterised in that**
the process section c. comprising impregnation and subsequent carbonisation is performed two to three times in succession.

9. Process according to claim 8,
**characterised in that**
a synthetic resin or a pitch is used as the carbonisable impregnating agent.

10. Process according to one of claims 5 to 9,
**characterised in that**
graphitisation according to process stage d. is performed within the temperature range from 1800 to 2200°C.

11. Process according to one of claims 5 to 10,
**characterised in that**
comminution in process stage e. is performed by a grinding operation.

12. Process according to claim 11,
**characterised in that**
a gentle grinding process is used in which fibre fragments as long as possible are obtained.

13. Process according to one of claims 5 to 12,
**characterised in that**
the binder used in process stage f. is a mixture of a synthetic resin with a solid pitch from the group comprising coal-tar pitch, petroleum pitch, mesophase pitch having a grain size of 1 to 60 µm and a softening point of 150 to 250°C.

14. Process according to one of claims 5 to 13,
**characterised in that**
carbonisation according to process stage h. is performed in such a manner that a high coke yield is obtained from the binder introduced in process stage f..

15. Process according to one of claims 5 to 14,
**characterised in that**
a temperature of 1750°C is not exceeded on performance of process stage i..

16. Process according to claim 15,
**characterised in that**
siliconisation is performed under a vacuum.

## Revendications

1. Matériau composite à haut allongement à la rupture renforcé de fibres de carbone, contenant du carbone et une matrice de carbure de silicium et de silicium,
**caractérisé par**
a) des fibres courtes de graphite de renforcement, réparties de manière homogène dans le matériau composite, d'une longueur de 0,1 à 5 mm, qui sont liées avec une enveloppe constituée de carbone graphité partiellement enrobé dans le carbure de silicium, apparues par cokéfaction puis graphitisation de résines synthétiques,
b) une matrice constituée essentiellement de carbure de silicium, contenant jusqu'à 20 % en poids de silicium élémentaire, qui est apparue par réaction d'une matrice de carbone présente dans le pré-produit du matériau composite, apparue par cokéfaction d'une matrice carbonée contenant un liant du carbone, avec du silicium liquide,
c) un allongement à la rupture de 0,25 à 0,5 % et
d) un volume de pores ouverts de 5 % au maximum.

2. Matériau composite selon la revendication 1,
**caractérisé en ce que**
l'enveloppe entourant les fibres courtes de graphite de renforcement est constituée de carbone graphité dépourvu de fentes ouvertes ou de pores.

3. Matériau composite selon les revendications 1 ou 2,
**caractérisé en ce qu'**
il a un volume de pores ouvert inférieur ou égal à 1 %.

4. Matériau composite selon la revendication 1, 2 ou 3,
**caractérisé en ce que**
la matrice constituée essentiellement de carbure de silicium ne contient pas plus de 15 % en poids de silicium élémentaire.

5. Procédé de production d'un matériau composite renforcé de fibres de carbone, contenant du carbone et une matrice de carbure de silicium et de silicium élémentaire, présentant un haut allongement à la rupture, constitué d'un prépreg de fibres sans fin ou de fibres courtes de carbone,
**caractérisé par** les étapes opératoires suivantes, à réaliser successivement :
a. Pressage d'au moins deux couches de prépreg constituées de fibres de graphite très solides et de résine synthétique et durcissement du corps obtenu par le pressage,
b. Carbonisation du corps obtenu selon l'étape opératoire a.
c. Imprégnation du corps poreux obtenu selon l'étape opératoire b. avec un agent d'imprégnation carbonisable, puis carbonisation du corps imprégné,
d. Graphitisation du corps obtenu selon l'étape opératoire c.,
e. Broyage du corps graphité obtenu selon l'étape opératoire d.,
f. Mélange d'au moins une partie du produit de broyage obtenu selon l'étape opératoire e. avec un liant contenant du carbone, du groupe des résines synthétiques, des poix, des mélanges de résines synthétiques et de poix,
g. Pressage et durcissement du mélange obtenu selon l'étape opératoire f.
h. Carbonisation de l'article moulé obtenu selon l'étape opératoire g.,
i. Infiltration du corps poreux obtenu selon l'étape opératoire h. avec du silicium liquide avec simultanément transformation de la matrice carbonée du corps en carbure de silicium avec maintien des fibres courtes de graphite présentes dans le corps.

6. Procédé selon la revendication 5,
**caractérisé en ce qu'**
on utilise dans l'étape opératoire a. des déchets de prépreg.

7. Procédé selon les revendications 5 ou 6,
**caractérisé en ce que**
les prépreg sont simplement disposés les uns sur les autres dans l'étape opératoire a., et dans cette étape opératoire, aucune autre étape de durcissement séparée n'est réalisée, et les prépreg sont durcis lors du durcissement qui se déroule au cours de l'étape opératoire b.

8. Procédé selon l'une des revendications 5 à 7,
**caractérisé en ce que**
l'étape opératoire c. constituée d'une imprégnation suivie par une carbonisation est réalisée jusqu'à trois fois successivement.

9. Procédé selon la revendication 8,
**caractérisé en ce qu'**
on utilise comme agent d'imprégnation carbonisable une résine synthétique.

10. Procédé selon l'une des revendications 5 à 9,
**caractérisé en ce qu'**
on réalise la graphitisation selon l'étape opératoire d. dans un intervalle de températures allant de 1800 à 2200°C.

11. Procédé selon l'une des revendications 5 à 10,
**caractérisé en ce que**
dans l'étape opératoire c) on concasse par un processus de broyage.

12. Procédé selon la revendication 11,
**caractérisé en ce qu'**
on applique un procédé de broyage doux, dans lequel on obtient des fragments de fibres aussi longs que possibles.

13. Procédé selon l'une des revendications 5 à 12,
**caractérisé en ce que**
dans l'étape opératoire f. on utilise comme liant un mélange d'une résine synthétique avec une poix solide du groupe des constitués par la poix de goudron de houille, la poix de pétrole, la poix en mésophase avec une granulométrie de 1 à 60 µm, avec un point de ramollissement de 150 à 250°C.

14. Procédé selon l'une des revendications 5 à 13,
**caractérisé en ce qu'**
on réalise la carbonisation selon l'étape opératoire h. de manière qu'on obtienne un haut rendement de coke à partir du liant introduit dans l'étape opératoire f.

15. Procédé selon l'une des revendications 5 à 14,
**caractérisé en ce qu'**
au cours de la réalisation de l'étape opératoire i. on ne dépasse pas une température de 1750°C.

16. Procédé selon la revendication 15,
**caractérisé en ce qu'**
on réalise la siliciation sous vide.
